# FASCICULE DE BREVET EUROPEEN

(11) **EP 2 601 464 B1**
(45) Date de publication et mention de la délivrance du brevet: **30.03.2016**
(21) Numéro de dépôt: 11740673.6
(22) Date de dépôt: 05.08.2011
(51) Int. Cl.: F26B 1/00, F26B 3/20, F26B 17/10, F26B 23/00, C02F 11/18, C02F 11/12, C02F 11/14

(54) **PROCÉDÉ ET INSTALLATION DE SÉCHAGE DE BOUES**
VERFAHREN UND ANLAGE ZUR SCHLAMMTROCKNUNG
METHOD AND INSTALLATION FOR DRYING SLUDGE

(30) Priorité: 06.08.2010 FR 1056490
(43) Date de publication de la demande: 12.06.2013
(73) Titulaire: Commissariat à l'Énergie Atomique et aux Énergies Alternatives, 75015 Paris (FR)
(72) Inventeur: HAARLEMMER, Geert, F-38330 Montbonnot-Saint-Martin (FR)
(74) Mandataire: Ilgart, Jean-Christophe
(86) Numéro de dépôt international: PCT/EP2011/063565
(87) Numéro de publication internationale: WO 2012/017092

(56) Documents cités:
- WO-A1-98/40681
- WO-A1-2006/095010
- WO-A1-2009/040919
- DE-B- 1 604 992
- FR-A- 463 633
- GB-A- 2 019 541
- US-A- 4 153 411
- US-A- 5 069 801
- US-A- 5 215 670
- US-A- 5 318 184

## Description

### DOMAINE TECHNIQUE

L'invention se rapporte à un procédé et une installation de séchage de boues.

Les boues provenant notamment des stations d'épuration des eaux usées doivent de plus en plus être traitées et entreposées. Le traitement peut comprendre une incinération, mais qui nécessite une très grande quantité d'énergie à cause de l'humidité des boues. C'est pourquoi l'incinération est souvent remplacée ou précédée par un séchage destiné à diminuer le taux d'humidité des boues et à les rendre ainsi plus combustibles. Le séchage est toutefois lui-même consommateur d'une énergie importante, les procédés connus consommant entre 120% et 180% de la chaleur latente de vaporisation de l'eau en général. Dans des procédés courants, les boues humides sont transportées sur une bande de tapis roulant, sur un disque ou sur un tambour et soumises à un débit de gaz chaud. L'énergie de chauffage peut être apportée au gaz de séchage par un four fonctionnant au gaz naturel, et on obtient des boues sèches et une buée composée du gaz de séchage et de vapeur d'eau ; l'énergie calorifique de ces produits est très difficile à récupérer.

Le document US-4 153 411 décrit un procédé où les boues humides sont mélangées à un matériau en grains tel que du sable préalablement chauffé. Le mélange intime entre les boues humides et le sable facilite l'évaporation de l'eau, le chauffage se faisant par l'intermédiaire du sable. Les boues sèches et le sable sont séparés dans un dispositif idoine tel qu'un cyclone après le séchage, et le sable peut être recyclé. Un autre avantage de cette conception est que le transport des boues à travers l'installation est plus facile, le sable rendant le mélange moins collant et donc moins adhérent aux parois des conduits de transport. Les difficultés de récupérer convenablement la chaleur ne sont toutefois pas évitées, et ce procédé n'est donc pas plus économe que les autres.

On connaît également un dispositif de séchage de boues commercialisé par la société GEA sous le nom « Superheated Steam Drying », constitué d'une boucle de vapeur dans laquelle les boues humides sont injectées. Pendant le séchage, la vapeur est chauffée par un moyen de chauffage externe. Les boues séchées sont récupérées dans un cyclone, tandis que le gaz les transportant est surchauffé, puis recomprimé afin d'être à nouveau mélangé à des boues humides.

US 5 215 670 (Girovich) décrit une installation et un procédé de séchage de boues. Les boues originaires d'une partie amont d'une installation (4, 5 et 6) passent par un sécheur indirect 1, c'est-à-dire un échangeur de chaleur où le gaz de chauffage n'est pas en contact avec les boues mais est séparé d'elles par une paroi. Il en sort des boues sèches passant par une installation de post-traitement. Le mélange d'air, de gaz divers, de particules et de vapeur d'eau passe d'abord par un condenseur (11) enlevant la vapeur d'eau, puis par un filtre (13) enlevant les particules, et ensuite le mélange d'air et de gaz subsistant est pour partie recyclé vers le sécheur (1) et pour partie utilisé comme gaz de combustion d'un four (2) qui fournit le gaz chaud utilisé dans le sécheur (1). Un dispositif de préchauffage (14) permet de transférer une partie de la chaleur des gaz de combustion à la fraction de gaz utilisé pour le mélange avec les boues.

Mais ce document ne reproduit pas la caractéristique qu'une compression de gaz chargé en vapeur d'eau est exploitée pour renforcer l'échange de chaleur à travers le sécheur, même si des ventilateurs (12 et 15) sont présents pour entretenir la circulation des gaz : l'humidité du gaz est enlevée dès la sortie du sécheur par le condenseur (11), et le séchage des boues par chauffage dans l'appareil (1) est accompli en réalité au moyen de gaz secs, originaires de l'extérieur et ayant passé par le four de combustion (2), au lieu de provenir du cycle de traitement des boues. La chaleur latente de condensation de la vapeur d'eau des gaz humides est récupérée dans le condenseur (11) par des boues liquides, mais aucun séchage de boues n'est accompli à cet endroit, les boules liquides appartiennent à un autre mélange, et rien n'indique que le gaz humide est comprimé. L'exploitation de la chaleur latente du gaz humide n'est pas faite dans les mêmes conditions que dans l'invention.

L'invention a pour sujet d'améliorer les procédés et les installations connus dans ce domaine technique, avant tout en récupérant la chaleur utilisée à la vaporisation pour travailler avec un flux extérieur de chaleur beaucoup plus modéré.

Un aspect de l'invention est un procédé continu de séchage de boues, comprenant un mélange de boues humides avec un matériau solide divisé dans un débit de gaz, un chauffage du mélange suffisant à produire le séchage de boues en vaporisant leur humidité dans le gaz, puis une séparation de boues devenues sèches, du gaz devenu humide et du matériau solide divisé, dans lequel le gaz devenu humide est comprimé en produisant une élévation de température, de telle sorte que la condensation de l'humidité de ce dernier serve à effectuer le chauffage d'une portion suivante du mélange dans une pluralité de conduits de soufflage dudit mélange et le conduit emprunté par le gaz devenu humide forme une calandre entourant ladite pluralité de conduits de soufflage.

Un sécheur selon l'invention comprend un circuit froid, dans lequel circulent le gaz (alors référencé SEC), les boues humides ainsi que la matière divisée. Au cours de sa circulation dans le circuit froid, l'humidité des boues se vaporise si bien qu'en aval du sécheur, les boues sont sèches et le gaz est humide. Ce circuit froid est chauffé par un circuit chaud, dans lequel circule ledit gaz humide, après avoir été d'une part séparé des boues et de la matière divisée, et, d'autre part, comprimé. Le gaz est alors comprimé et à l'état humide.

Une caractéristique essentielle de l'invention est que la compression du gaz humide permet d'élever la température de rosée de la vapeur d'eau. Ainsi, lorsque le gaz humide (HUM.) pénètre dans le circuit chaud du sécheur, la vapeur se trouve au contact de la paroi du circuit froid (paroi froide) dont la température est inférieure à la température de rosée de la vapeur. La vapeur se condense alors sur la paroi froide, ce qui permet de récupérer la chaleur latente de vaporisation, qui sert alors à chauffer le gaz (SEC) circulant dans le circuit froid, et le rend assez chaud pour permettre de l'appliquer au séchage des boues. En effet, dans le circuit froid, le mélange constitué par le gaz (SEC), les boues humides et la matière dispersée, est maintenu à une pression suffisamment basse pour que l'humidité des boues se vaporise, ce qui humidifie le gaz et assèche les boues. Le procédé de séchage peut être entretenu avec un apport de chaleur extérieure réduit, de 20% à 50% de la chaleur latente de vaporisation de l'eau, plus précisément de 30% environ dans de bonnes réalisations de l'invention. L'intérêt de la compression du gaz chaud et humide (HUM.) est de porter la température de rosée à un niveau supérieur à la température du circuit froid du sécheur.

Il est conforme à l'invention que le gaz, après avoir effectué le chauffage, soit asséché et recyclé en l'incorporant à une seconde portion suivante du mélange, afin de ne pas perdre la chaleur restante du gaz, mais d'injecter au contraire cette chaleur dans le mélange avant de le sécher. On obtient alors un circuit complètement fermé de gaz qui évite les effluents malodorants. Le choix du gaz, comme un gaz neutre, devient alors possible. Le gaz asséché peut alors avantageusement être réchauffé avant de joindre cette portion du mélange.

Un autre effet favorable de ce gaz asséché est qu'il peut servir à entraîner le mélange à travers un lieu du séchage des boues et jusqu'à un lieu de la séparation. Autrement dit, le gaz sert de moyen de transport pneumatique des boues mélangées à une matière divisée.

Un autre aspect de l'invention est une installation de séchage de boues, comprenant un mélangeur de boues humides et d'un matériau solide divisé, un injecteur d'un débit de gaz (SEC), un sécheur des boues, un séparateur des boues devenues sèches, du matériau solide divisé et du gaz devenu humide (HUM.), un moyen de transport du mélange entre le mélangeur et le séparateur à travers le sécheur, un conduit reliant le séparateur au sécheur et emprunté par le gaz devenu humide (HUM.), un compresseur présent entre le séparateur et le sécheur. Le sécheur est un échangeur de chaleur entre le gaz devenu humide (HUM.) et le mélange. L'injecteur est un injecteur d'entraînement sous forme pulvérisée des boues et du matériau solide divisé, et le moyen de transport du mélange consiste, après l'injecteur, en une pluralité de conduits de soufflage du mélange qui traversent le sécheur, le conduit emprunté par le gaz devenu humide formant une calandre entourant ladite pluralité de conduits de soufflage.

Le conduit muni du compresseur permet d'acheminer le gaz humide (HUM.) vers une calandre du sécheur, ou circuit chaud, dans laquelle une partie de son humidité se condense au contact du circuit froid, afin d'employer la chaleur que le gaz récupère alors au séchage des boues comme on l'a vu ci-dessus.

L'injecteur peut être situé juste à une sortie du mélangeur, et comme le moyen de transport du mélange consiste en un conduit de soufflage du gaz, l'installation peut être conçue de façon que le gaz recyclé serve à l'entraînement du mélange. Le conduit de soufflage étant divisé en plusieurs conduits adjacents, au moins à travers le sécheur, et le conduit emprunté par le gaz devenu humide formant une calandre entourant le conduit de soufflage de gaz, l'échange de chaleur est alors particulièrement facile grâce à la grande superficie totale des tubes. Il est à noter que la division du conduit de soufflage en tubes fins facilite le guidage de l'écoulement et la régularité de l'entraînement. La présence d'une matière solide divisée telle que du sable facilite aussi la fragmentation du mélange, son écoulement dans les tubes ainsi que le nettoyage régulier des parois des tubes. Cet entraînement du mélange par soufflage, et même purement par soufflage, en aval du lieu où le mélange de boue et de matière solide divisée atteint les conduits de soufflage à travers le réacteur et jusqu'à séparation du mélange est une autre caractéristique importante de l'invention, qui assure une grande capacité de traitement, tout comme la division du conduit en tubes. La matière solide divisée étant prépondérante ou très prépondérante dans la matière entraînée par rapport aux boues, l'écoulement par voie pneumatique est plus facile à accomplir puisque la pulvérisation du mélange l'est aussi.

Dans un mode de réalisation important, la calandre est divisée par des chicanes en compartiments alignés horizontalement, chacun des compartiments étant muni d'une canalisation d'évacuation d'eau s'ouvrant sous les compartiments et s'étendant au-dessus des compartiments. La division en chicanes impose un trajet zigzaguant du gaz de chauffage qui favorise encore l'échange de chaleur, et une grande partie de l'humidité condensée dans le gaz se dépose au fond de la calandre où elle peut être régulièrement retirée.

Le conduit peut relier le sécheur à l'injecteur pour réaliser le recyclage du gaz en passant par un dispositif de trempage. Ce dispositif permet de condenser une partie de l'humidité du gaz, en aval du sécheur.

Ainsi qu'on l'a mentionné, une quantité réduite de chaleur extérieure est nécessaire à l'entretien du processus. On prévoit que les seules sources de chaleur extérieure seront avantageusement un surchauffeur du mélange entre le sécheur et le séparateur, un préchauffeur du gaz entre le dispositif de trempage quand il existe et l'injecteur, ou les deux.

L'invention sera maintenant décrite plus en détail au moyen des figures suivante :
- la figure 1 est une vue générale de l'installation,
- la figure 2 illustre un mélangeur et une réalisation correspondante d'injecteur,
- la figure 3 illustre une réalisation de sécheur,
- la figure 4 illustre un filtre,
- la figure 5 illustre une autre réalisation d'injecteur,
- la figure 6 illustre une autre réalisation de sécheur,
- la figure 7 représente l'évolution de la température dans le sécheur du gaz humide, circulant dans le circuit chaud, et du gaz transportant les boues, circulant dans le circuit froid.

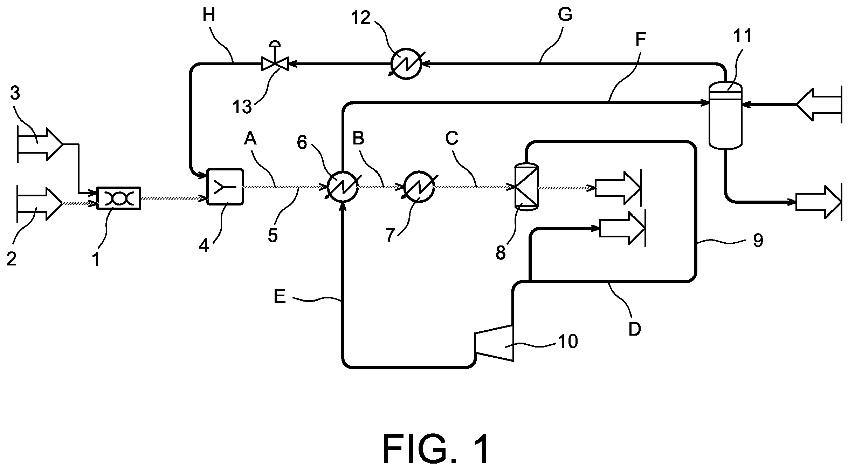

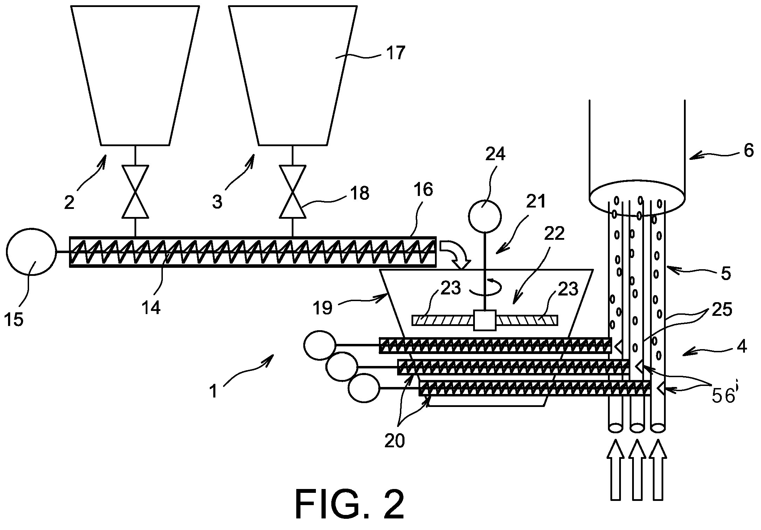

On décrira d'abord la figure 1. L'installation comprend un mélangeur (1) auquel aboutissent des alimentations (2 et 3) de boues humides et de sable ou d'une autre matière divisée, un injecteur (4) à la sortie du mélangeur (1), puis successivement vers l'aval, sur un trajet de transport du mélange (5), un sécheur (6), un surchauffeur (7) et un séparateur (8). Un conduit de recyclage (9) mène successivement du séparateur (8) à un compresseur (10), au sécheur (6), à un dispositif de trempage (11), à un préchauffeur (12), à une vanne de réglage de débit (13), et aboutit à l'injecteur (4). Certains de ces appareils et leur agencement vont maintenant être décrits plus en détail. La figure 2 représente ainsi le mélangeur (1), qui consiste en une vis sans fin (14) tournée par un moteur (15) dans une gaine (16) que traversent les alimentations (2 et 3), pour déverser les boues et le sable entre les filets de la vis (14). Les alimentations (2 et 3) consistent chacune en une trémie (17) reliée au mélangeur (1) par une canalisation aval de réglage (18). Le mélange de boues humides et de sable formé dans la vis (14) tombe à l'extrémité de celle-ci dans l'injecteur (4), et d'abord dans un bac (19) d'où il est soutiré continuellement par des vis doseuses (20), de structure identique à celles (14) présentes dans le mélangeur (1) mais dont la fonction est de transporter des débits séparés, plus petits et continus du mélange vers le trajet de transport (5). Le bac (19) comprend encore, au-dessus des vis (20), un système de brassage (21) à hélice (22) tournant autour d'un axe horizontal. Les pales de l'hélice (22) sont elles-mêmes des vis tournantes (23) qui complètent le mélange et empêchent un voûtage, c'est-à-dire la formation d'un creux en dessus de ces vis. Ainsi, les vis tournantes égalisent le niveau du mélange. Un moteur (24) assure les rotations de l'hélice (22) et des vis (23). D'autres dispositifs de brassage sont concevables.

Les vis doseuses (20) s'étendant au fond du bac de mélange (19) et hors de lui aboutissent respectivement à des conduits de soufflage (25) fins et parallèles avec lesquels ils sont à angle droit ; les vis doseuses (20) comme les conduits de soufflage (25) sont avantageusement horizontaux. L'injecteur (4) finit à leurs intersections, et le trajet de transport (5) correspond à l'ensemble des conduits de soufflage (25). Des restrictions de section (56) peuvent être établies dans les conduits de soufflage (25), devant le débouché des vis doseuses (20), pour augmenter la vitesse du gaz de soufflage et favoriser la fragmentation du mélange et son entraînement par le gaz. Les conduits de soufflage (25) provenant de bifurcations du conduit de recyclage (9), réalisées en aval de la vanne de réglage (13), elles sont parcourues par le gaz originaire du séparateur (8). Les conduits de soufflage (25) sont avantageusement rectilignes pour limiter les pertes de charge, faciliter l'auto-nettoyage par le sable ou plus généralement la matiére solide divisée et réduire l'usure, mais ils peuvent être longs sans difficulté.

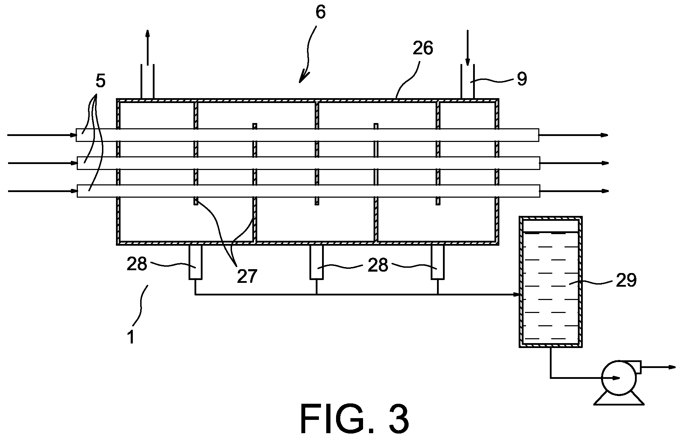

On se reporte à la figure 3. Le banc des conduits de soufflage (25) traverse une calandre (26) du sécheur (6) en formant un échangeur de chaleur avec elle. La calandre (26) correspond à une portion du conduit de recyclage (9), dont une portion amont y débouche d'un côté et une portion aval du côté opposé. Des chicanes (27) divisent l'intérieur de la calandre (26) en compartiments, que le gaz parcourant le conduit de recyclage (9) traverse successivement en léchant les conduits de soufflage (25) et produisant ainsi l'échange de chaleur. Le gaz de recyclage étant humide et perdant la plus grande partie de son humidité, par condensation, dans la calandre (26), l'eau ruisselle au fond et doit être évacuée. Des canalisations (28) s'étendent pour cela au fond des compartiments de la calandre (26) et aboutissent à un réservoir (29). Comme une différence de pression non négligeable existe entre les extrémités de la calandre (26), les niveaux d'eau - corrélés à celui du réservoir (29) - peuvent être nettement différents (1m pour une différence de pression de 0,1 bar par exemple), de sorte qu'il faut éviter que l'eau déposée dans le compartiment le plus en aval n'interrompe la circulation du gaz ou n'atteigne les conduits de soufflage (25). Les canalisations (28) s'étendant vers le bas à partir du dessous de la calandre (26) permettent d'utiliser un réservoir (29) de hauteur suffisante et d'éviter ce problème.

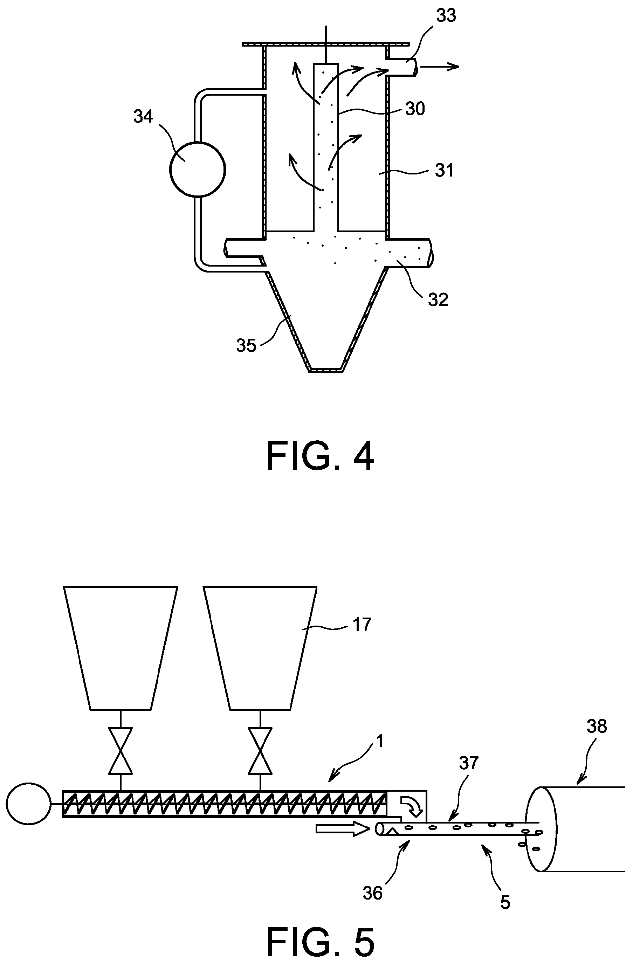

D'autres éléments de l'installation sont déjà connus et n'imposent pas, ou imposent peu, de description particulière. On mentionnera que le séparateur (8) peut comprendre un cyclone pour récupérer le sable, puis un filtre pour recueillir les boues sèches. Le filtre peut être un filtre souple en chandelle de genre connu, comprenant d'après la figure 4 une membrane cylindrique poreuse et souple (30) suspendue dans un réservoir (31). Le mélange de gaz humide et de boues sèches doit traverser la membrane (30) par un écoulement ascendant d'un conduit d'entrée (32) à un conduit de sortie (33). Un dispositif (34) de mise en pression maintient la membrane (30) gonflée et ouverte. Le gaz humide traverse la membrane (30), mais les particules de boues y sont retenues. Quand le filtre est plein, on arrête la dépression produite par le dispositif (34), le filtre (30) s'affaisse, et son contenu tombe dans une trémie (35) au fond du réservoir (31) où il peut être recueilli. Le sable récupéré peut être envoyé automatiquement à l'alimentation (3) par un dispositif tel qu'un convoyeur à bande. Le dispositif peut encore être un circuit fermé, les particules sableuses des boues étant incorporées au sable du mélange et compensant les pertes de sable par incrustation dans le circuit. Le dispositif de trempage peut être constitué d'une colonne à plateaux ou à garnissage, dans laquelle ruisselle de l'eau froide. Le gaz chaud (typiquement 60°), provenant du circuit chaud du sécheur, est injecté dans le bas de la colonne et circule à contre-courant de l'écoulement d'eau froide. Il subit alors un contact intime avec l'eau, ce qui le refroidit vers une température de l'ordre de 30° par exemple. A la sortie du dispositif de trempage, l'humidité absolue du gaz a été abaissée, bien que son humidité relative soit toujours voisine de 100%. Le surchauffeur (7), le préchauffeur (12), le compresseur (10) et la vanne (13) sont des éléments ordinaires. Le surchauffeur (7) peut notamment consister en une boîte à travers laquelle circule un fluide chaud (eau ou vapeur), située juste à la sortie du sécheur (6) (figure 3).

On va maintenant décrire le fonctionnement de l'installation. Le sable et la boue humide sont brassés dans le mélangeur (1), et le mélange fourni à l'injecteur (4) où il est entraîné sous forme pulvérisée par un débit d'air. Il est fortement échauffé dans le sécheur (6), au point que l'humidité des boues se vaporise. Le surchauffeur (7) augmente quelque peu la température du mélange et du gaz de façon à éviter tout risque de recondensation dans le séparateur (8), de collage de la matière solide ou de colmatage et plus généralement d'obstruction des conduits de soufflage (25). Le sable et les boues sèches sont recueillis dans le séparateur (8), le sable est recyclé, les boues périodiquement enlevées, et le gaz, porteur maintenant de l'humidité des boues, continue son cycle dans le conduit (9). Il est suffisamment comprimé par le compresseur (10) pour que l'humidité puisse s'y condenser à une température plus élevée que celle du gaz (SEC) circulant dans le circuit froid du sécheur. C'est parce que la condensation de l'eau se produit, dans le circuit chaud, à une température plus élevée, grâce à une pression plus élevée, que l'on obtient une différence de température entre le circuit froid et le circuit chaud. Cette différence de température permet à la chaleur contenue dans le gaz chaud et humide d'être transférée au mélange circulant dans le circuit froid, ce qui entraîne la vaporisation de l'eau présente dans les boues. Le mélange diphasique se rafraîchit à travers le sécheur (6), l'eau condensée au contact du circuit froid est recueillie par le fond de la calandre (26). En aval de la calandre, le gaz humide est refroidi par le dispositif de trempage (11), ce qui a pour effet d'abaisser l'humidité absolue de ce gaz. Ce dernier continue le cycle, et subit l'action du préchauffeur (12), ce qui a pour effet d'augmenter la température et d'abaisser l'humidité relative du gaz. Le gaz rejoint enfin l'injecteur (4) où il entraîne une portion suivante du mélange de sable et boues humides. La vanne de réglage (13) est utile pour amorcer le processus, en étant d'abord à peu près fermée, puis ouverte progressivement. Dans une installation concrète, on envisage un débit de 20 tonnes à l'heure de gaz, de 0,9 tonne à l'heure de boues sèches, avec 2,6 tonnes à l'heure d'humidité, et de 10 tonnes à l'heure de sable. Les boues et le sable arrivent à température et pression ambiantes. On donne ci-après un tableau des températures et pressions atteintes aux différentes sections de l'installation, notées de A à H respectivement, dans le trajet de transport (5) après l'injecteur (4), le sécheur (6), et le surchauffeur (7), puis dans le conduit de recyclage (9) après le séparateur (8), le compresseur (10), le sécheur (6), le dispositif de trempage (11), et le préchauffeur (12).

**Tableau I**

| Section | A | B | C | D | E | F | G | H |
|---|---|---|---|---|---|---|---|---|
| Température (°C) | 37 | 70 | 81 | 85 | 175 | 56 | 33 | 100 |
| p (bars) | 0,9 | 0, 8 | 0,7 | 0,6 | 1, 2 | 1,1 | 1 | 0,9 |

On mesure l'importance de l'échauffement produit par la compression et la recondensation de l'humidité, qui permet un échange de chaleur suffisant à vaporiser l'humidité d'une portion suivante du mélange. La dépression dans le trajet de transport (5) favorise la dépression tout en facilitant l'emploi d'une source de chaleur de basse qualité qu'est un fluide chaud.

La vitesse dans le trajet de transport (5) est de 20 à 30m à la seconde. On limitera le nombre de coudes. Les coudes éventuels sont construits en béton dur de façon à limiter l'usure produite par le sable. Les conduits de soufflage (5) peuvent consister en des tuyaux ordinaires d'un pouce de diamètre. Leur nombre sera une fonction de la capacité du sécheur. Ils peuvent être au nombre de cent, et la calandre (26) peut avoir une forme cylindrique avec un diamètre d'un mètre et une longueur de quelques mètres à quelques dizaines de mètres. La surface d'échange de chaleur est de cent mètres carrés environ pour le sécheur (6), de vingt-cinq mètres carrés environ pour le surchauffeur (7). La circulation dans le sécheur (6) se faisant à contre-courant, comme on l'illustre à la figure 3, l'échange de chaleur s'effectue dans des conditions assez homogènes sur la longueur de la calandre (26), le mélange circulant dans le circuit froid et le gaz humide (HUM.) en échange mutuel ayant en général une différence de température comprise entre 10 et 20°C environ à tout endroit du sécheur (6), sauf à l'entrée du gaz humide (HUM.) où cette différence est plus importante.

La figure 7 donne un exemple de l'évolution de la température (en °C) du mélange (courbe M) circulant dans le circuit froid, et du gaz chaud et humide (courbe G) circulant dans le circuit chaud, le sécheur étant supposé linéaire et de longueur de 20m. L'axe des abscisses représente cette longueur. Selon cette figure 7, le mélange circule selon les abscisses croissantes, tandis que le gaz chaud et humide (HUM.) circule à contre sens, selon les abscisses décroissantes.

L'entrée du gaz chaud et humide (HUM.) dans le circuit chaud du sécheur se traduit par un refroidissement brutal (16<x<20), jusqu'à ce que la température atteigne une inflexion (x = 16), qui correspond alors à la température de rosée de la vapeur d'eau. De x = 16 à x = 0, la vapeur d'eau contenue dans le gaz chaud se condense au contact de la paroi froide.

Au cours de son parcours dans le circuit froid, le mélange se réchauffe peu à peu.

Le cyclone du séparateur (8) est dimensionné pour séparer les particules de sable de 300 à 1000 microns de dimension des particules de 50 à 200 microns de dimension de boues sèches. La puissance du compresseur (10) peut être de 325 kW et celle du préchauffeur et du surchauffeur de 200 kW au total. Une compression moins importante du gaz peut être acceptée avec un échange de chaleur identique, si de la vapeur d'eau (éventuellement disponible ailleurs dans l'installation de traitement) est injectée dans la calandre (26) en suivant le même chemin que le gaz de recyclage par un conduit d'alimentation (44). Le gaz de recyclage est avantageusement un gaz inerte.

Un autre mode de réalisation sera maintenant décrit en liaison aux figures 5 et 6 : le transport purement pneumatique du mélange de sable et de boues est remplacé par un transport dans un tambour s'étendant à l'intérieur du sécheur.

La figure 5 montre que l'injecteur, maintenant (36), peut alors être simplifié puisque le bac (19) et les vis doseuses (20) disparaissent : la sortie de la vis du mélangeur (1) débouche directement dans un conduit de soufflage unique (37) qui correspond ici à l'entrée du trajet de transport (5). Le conduit de soufflage (37) est, comme précédemment, dans le prolongement du conduit de recyclage (9).

Le sécheur porte la référence (38). Il comporte, outre une calandre (26) semblable à celle de la réalisation précédente, un tambour (39) qui y est logé dans toute sa longueur et tourne autour de son axe sous l'action d'un moteur (40) ; il s'étend encore à travers le surchauffeur (7) jusqu'au cyclone (41) du séparateur (8). Le tambour (39) peut avoir environ un mètre de diamètre et quinze mètres de long ; sa forme est toutefois légèrement conique, s'amenuisant vers le cyclone (41), afin d'augmenter la vitesse du gaz de soufflage pour qu'à la fin un transport pneumatique s'installe et véhicule les particules arrivant au cyclone (41). Des ailettes (42) disposées à l'extérieur du tambour (39) contribuent à donner la superficie souhaitée d'échange de chaleur de cent mètres carrés environ. Une structure statique de type vis intérieure (43) assure un mouvement de translation du mélange. Cette réalisation a une structure plus simple en général, mais l'inconvénient de comporter une partie mobile - le tambour (39) - dans l'installation, ce qui impose l'addition de joints d'étanchéité si l'on souhaite éviter les pertes de chaleur et limiter les nuisances olfactives. Quoi qu'il en soit, le transport pneumatique au gaz chaud est un moyen efficace de déplacer le mélange tout en favorisant l'échange de chaleur par un préchauffage du mélange, et la vaporisation de l'humidité grâce à la fragmentation du mélange.

## Revendications

1. Procédé continu de séchage de boues, comprenant un mélange (A) de boues humides avec un matériau solide divisé dans un débit de gaz, un chauffage (6) du mélange suffisant à produire le séchage de boues en vaporisant leur humidité dans le gaz, puis une séparation (8) des boues devenues sèches, du gaz devenu humide et du matériau solide divisé, dans lequel le gaz devenu humide est comprimé (10) en produisant une élévation de température puis sert à effectuer le chauffage d'une portion suivante du mélange par condensation de l'humidité dudit gaz humide ; et le mélange est entraîné sous forme pulvérisée par le débit de gaz pendant le séchage en suivant un écoulement divisé dans une pluralité de conduits de soufflage (25) dudit mélange et le conduit emprunté par le gaz devenu humide forme une calandre (26) entourant ladite pluralité de conduits de soufflage (25).

2. Procédé de séchage de boues suivant la revendication 1, **caractérisé en ce que** le gaz, après avoir effectué le chauffage, est asséché (11) et recyclé (H) vers une seconde portion suivante du mélange.

3. Procédé de séchage de boues suivant la revendication 2, **caractérisé en ce que** le gaz asséché est réchauffé (12) avant de joindre la seconde portion suivante du mélange.

4. Procédé de séchage de boues suivant l'une quelconque des revendications 2 ou 3, **caractérisé en ce que** le gaz asséché sert à entraîner le mélange à travers un lieu (6) du séchage des boues et jusqu'à un lieu (8) de la séparation.

5. Installation de séchage de boues, comprenant un mélangeur (1) de boues humides et d'un matériau solide divisé, un injecteur (4, 36) d'un débit de gaz situé à une sortie du mélangeur (1), un sécheur (6, 38) des boues, un séparateur (8) des boues devenues sèches, du matériau solide divisé et du gaz devenu humide, un moyen de transport (5, 25, 37, 39) du mélange entre le mélangeur (1) et le séparateur (8) à travers le sécheur, un conduit (9) reliant le séparateur (8) au sécheur (6, 38) et emprunté par le gaz devenu humide, un compresseur (10) présent entre le séparateur et le sécheur, le sécheur étant un échangeur de chaleur entre le gaz devenu humide et le mélange, l'injecteur (4, 36) étant un injecteur d'entraînement sous forme pulvérisée des boues et du matériau solide divisé, et le moyen de transport du mélange consistant, après l'injecteur (4), en une pluralité de conduits de soufflage (25) du mélange qui traversent le sécheur (6, 38), le conduit emprunté par le gaz devenu humide formant une calandre (26) entourant ladite pluralité de conduits de soufflage (25).

6. Installation de séchage de boues suivant la revendication 5, **caractérisé en ce que** la calandre (26) a un fond muni d'une évacuation d'eau (28, 29).

7. Installation de séchage de boues suivant la revendication 5 ou 6, **caractérisée en ce que** le conduit (9) relie aussi le sécheur (6, 38) à l'injecteur (4, 36) en passant par un dispositif de trempage (11) du gaz.

8. Installation de séchage de boues suivant l'une quelconque des revendications 5 à 7, **caractérisé en ce que** le moyen de transport du mélange comprend un tambour (39) tournant dans le sécheur (38), et le conduit emprunté par le gaz devenu humide forme une calandre entourant le tambour.

9. Installation de séchage de boues suivant la revendication 6, **caractérisée en ce que** la calandre est divisée par des chicanes (27) en compartiments alignés horizontalement, chacun des compartiments étant muni d'une canalisation d'évacuation d'eau (28) s'ouvrant sous les compartiments et s'étendant au-dessous des compartiments.

10. Installation de séchage de boues suivant l'une quelconque des revendications 5 à 9, **caractérisée en ce qu'**elle comprend un surchauffeur (7) du mélange entre le sécheur et le séparateur, ou un préchauffeur (12) du gaz entre le dispositif de trempage de gaz et l'injecteur, ou les deux, comme seules sources de chaleur extérieure.

## Patentansprüche

1. Kontinuierliches Verfahren zur Trocknung von Schlämmen, umfassend ein Mischen (A) von feuchten Schlämmen mit einem unterteilten festen Material in einem Gasstrom, ein Heizen (6) der Mischung, das ausreichend ist, um die Trocknung von Schlämmen zu bewirken, indem ihre Feuchtigkeit in dem Gas verdampft wird, und anschließend eine Separation (8) der trocken gewordenen Schlämme von dem feucht gewordenen Gas und dem unterteilten festen Material, wobei das feucht gewordene Gas unter Erzeugung eines Temperaturanstiegs komprimiert wird (10) und anschließend dazu dient, ein Aufheizen eines nachfolgenden Teils der Mischung durch Kondensation der Feuchtigkeit des feuchten Gases zu bewirken, und wobei die Mischung in pulverisierter Form von dem Gasstrom während der Trocknung mitgenommen wird, wobei sie einer Strömung folgt, die in eine Mehrzahl von Leitungen (25) zum Ausblasen der Mischung unterteilt ist, und wobei die von dem feucht gewordenen Gas genommene Leitung einen Kalander (26) bildet, der die Mehrzahl von Ausblasleitungen (25) umgibt.

2. Verfahren zum Trocknen von Schlämmen nach Anspruch 1, **dadurch gekennzeichnet, dass** das Gas, nachdem es die Aufheizung bewirkt hat, ausgetrocknet (11) und für einen zweiten folgenden Teil der Mischung wiederverwendet (H) wird.

3. Verfahren zum Trocknen von Schlämmen nach Anspruch 2, **dadurch gekennzeichnet, dass** das ausgetrocknete Gas wieder aufgeheizt wird (12), bevor es den zweiten nachfolgenden Teil der Mischung erreicht.

4. Verfahren zum Trocknen von Schlämmen nach einem der Ansprüche 2 oder 3, **dadurch gekennzeichnet, dass** das ausgetrocknete Gas dazu dient, die Mischung durch einen Ort (6) zum Trocknen von Schlämmen hindurch und bis zu einem Ort (8) für die Separation mitzunehmen.

5. Anlage zum Trocknen von Schlämmen, umfassend einen Mischer (1) für feuchte Schlämme und für ein unterteiltes festes Material, einen Injektor (4, 36) für einen Gasstrom, der an einem Ausgang des Mischers (1) angeordnet ist, einen Trockner (6, 38) für Schlämme, einen Separator (8) für die trocken gewordenen Schlämme, für das unterteilte feste Material und für das feucht gewordene Gas, eine Einrichtung (5, 25, 37, 39) zum Transport der Mischung zwischen dem Mischer (1) und dem Separator (8) durch den Trockner hindurch, eine Leitung (9), die den Separator (8) mit dem Trockner (6, 38) verbindet und von dem feucht gewordenen Gas genommen wird, einen Kompressor (10), der zwischen dem Separator und dem Trockner vorgesehen ist, wobei der Trockner ein Wärmetauscher zwischen dem feucht gewordenen Gas und der Mischung ist, wobei der Injektor (4, 36) ein Injektor zum Mitnehmen der Schlämme in pulverisierter Form und des unterteilten festen Materials ist, und wobei die Einrichtung zum Transport der Mischung nach dem Injektor (4) eine Mehrzahl von Leitungen (25) zum Ausblasen der Mischung umfasst, die den Trockner (6, 38) durchlaufen, wobei die von dem feucht gewordenen Gas genommene Leitung einen Kalander (26) bildet, der die Mehrzahl von Ausblasleitungen (25) umgibt.

6. Anlage zum Trocknen von Schlämmen nach Anspruch 5, **dadurch gekennzeichnet, dass** der Kalander (26) einen Boden hat, der mit einer Wasserableitung (28, 29) ausgestattet ist.

7. Anlage zum Trocknen von Schlämmen nach Anspruch 5 oder 6, **dadurch gekennzeichnet, dass** die Leitung (9) ferner den Trockner (6, 38) mit dem Injektor (4, 36) verbindet, wobei sie durch eine Gaswässerungsvorrichtung (11) verläuft.

8. Anlage zum Trocknen von Schlämmen nach einem der Ansprüche 5 bis 7, **dadurch gekennzeichnet, dass** die Einrichtung zum Transport der Mischung eine Trommel (39) umfasst, die sich in dem Trockner (38) dreht, und dass die von dem feucht gewordenen Gas genommene Leitung einen Kalander bildet, der die Trommel umgibt.

9. Anlage zum Trocknen von Schlämmen nach Anspruch 6, **dadurch gekennzeichnet, dass** der Kalander durch Schikanen (27) in horizontal ausgerichtete Fächer unterteilt ist, wobei jedes der Fächer mit einer Wasserableitungskanalisation (28) ausgestattet ist, die sich unter den Fächern öffnet und sich unter die Fächer erstreckt.

10. Anlage zum Trocknen von Schlämmen nach einem der Ansprüche 5 bis 9, **dadurch gekennzeichnet, dass** sie einen Überheizer (7) für die Mischung zwischen dem Trockner und dem Separator umfasst, oder einen Vorheizer (12) für das Gas zwischen der Gaswässerungsvorrichtung und dem Injektor, oder beides, als einzige Quellen von äußerer Wärme.

## Claims

1. Continuous sludge drying method, comprising a mix (A) of wet sludge with a divided solid material in a gas flow, a heating (6) of the mix sufficient to dry the sludge by evaporating a moisture contained in the sludge into the gas, then a separation of the dried sludge from the wet gas and the divided solid material, in which the wet gas is compressed (10) resulting in an increase in temperature and is then used to heat a next portion of the mix by condensation of the moisture contained in said wet gas ; and the mix is driven in a spray form by the gas flow during the drying in following a divided flow in a plurality of blow ducts (25) of said mix, and the duct followed by the wet gas forms a shell (26) surrounding said plurality of blow ducts (25).

2. Sludge drying method according to claim 1, **characterised in that** the gas, after the heating, is dried (11) and recycled (H) towards a second subsequent portion of the mix.

3. Sludge drying method according to claim 2, **characterised in that** the dried gas is heated (12) before returning to the second subsequent portion of mix.

4. Sludge drying method according to any one of claims 2 or 3, **characterised in that** the dried gas is used to entrain the mix through a sludge drying location (6) as far as a location (8) of the separation.

5. Sludge drying installation, comprising a mixer (1) of wet sludge and divided solid material, a gas flow injector (4, 36) of a gas flow located at an outlet of the mixer (1), a dryer (6, 38) of the sludge, a separator (8) of dried sludge, divided solid material and gas that has become wet, a means (5, 25, 37, 39) of transporting the mix between the mixer (1) and the separator (8) through the dryer, a duct (9) connecting the separator (8) to the dryer (6, 38) which is followed by the gas that has become wet, a compressor (10) being present between the separator and the dryer, the dryer being a heat exchanger between the wet gas and the mix, the injector (4, 36) being an injector driving the sludge and the divided solid material in a spray form, and the means of transport of the mix consisting, after the injector (4), in a plurality of blow ducts (25) of the mix, which pass through the drier (6, 38), the duct followed by the wet gas forming a shell (26) surrounding said plurality of blow ducts (25).

6. Sludge drying installation according to claim 5, **characterised in that** the shell (26) has a bottom provided with a water drain (28, 29).

7. Sludge drying installation according to claim 5 or 6, **characterised in that** the duct (9) also connects the dryer (6, 38) to the injector (4, 36) passing through a wetting device (11) of the gas.

8. Sludge drying installation according to claim 5 to 7, **characterised in that** the mix transport means comprises a drum (39) rotating in the dryer (38), and the duct through which the gas that has become wet passes forms a shell surrounding the drum.

9. Sludge drying installation according to claim 6, **characterised in that** the shell is divided into horizontally aligned compartments by baffles (27), each of the compartments being provided with a water drainage duct (28) opening under the compartments and extending under the compartments.

10. Sludge drying installation according to any one of claims 5 to 9, **characterised in that** it comprises a superheater (7) of the mix between the dryer and the separator, or a gas preheater (12) between the gas wetting device and the injector, or both, as only external heat sources.
